# EUROPÄISCHE PATENTSCHRIFT

(11) **EP 3 729 534 B1**
(45) Veröffentlichungstag und Bekanntmachung des Hinweises auf die Patenterteilung: **14.08.2024**
(21) Anmeldenummer: 18807917.2
(22) Anmeldetag: 19.11.2018
(51) Int. Cl.: H01M 50/211, H01M 10/052, H01M 10/0565

(54) **AKKUPACK FÜR EINE HANDWERKZEUGMASCHINE**
BATTERY PACK FOR A HAND TOOL
BATTERIE POUR UNE MACHINE-OUTIL PORTATIVE

(30) Priorität: 18.12.2017 EP 17207924
(43) Veröffentlichungstag der Anmeldung: 28.10.2020
(73) Patentinhaber: Hilti Aktiengesellschaft, 9494 Schaan (LI)
(72) Erfinder: STANGER, Robert, 87600 Kaufbeuren (DE)
(74) Vertreter: Hilti Aktiengesellschaft Corporate Intellectual Property
(86) Internationale Anmeldenummer: PCT/EP2018/081717
(87) Internationale Veröffentlichungsnummer: WO 2019/120806

(56) Entgegenhaltungen:
- WO-A1-2014/206323
- DE-A1- 102013 018 475

## Beschreibung

Die vorliegende Erfindung betrifft ein Akkupack für eine elektrische Handwerkzeugmaschine, wobei der Akkupack ein Gehäuse mit wenigstens zwei darin angeordneten Pouch-Zellen aufweist, wobei zwischen den Pouch-Zellen ein Füllmaterial befindlich ist.

DE 10 2013 111 500 A1 offenbart einen Akkumulator zum Einsatz in Elektrofahrzeugen, wobei der Akkumulator mehrere Akkuzellen aufweist, von denen jede einzelne Akkuzelle unter Vorspannung in ein Harzhärtergemisch eingegossen ist und eine Volumenarbeit der Akkuzellen zu vermeiden.

Es ist Aufgabe der vorliegenden Erfindung, einen Akkupack zu schaffen, bei dem Beschädigungen, insbesondere des Gehäuses vermieden, zumindest aber verringert werden und gleichzeitig eine möglichst sichere Anwendung zu gewährleisten.

Die Aufgabe wird dadurch gelöst, dass das Füllmaterial reversibel-elastisch verformbar ist, derart, dass das Füllmaterial einem Volumenanstieg der Pouch-Zellen nachgeben kann.

Die Erfindung schließt die Erkenntnis ein, dass bei Akkupacks des Standes der Technik die Akkuzellen unter Vorspannung in ein Harzhärtergemisch eingegossen sind. Es wurde beobachtet, dass die bei einem Volumenanstieg der Akkuzellen - dem sogenannten Swelling - zu mechanischen Spannungen und Kräften, die zumindest teilweise auf das Gehäuse des Akkupacks übertragen werden, führen kann. In besonders extremen Fällen können die Akkuzellen selbst, aber auch das Gehäuse des Akkupacks beschädigt werden. Das sogenannte Swelling ist bisher unvermeidlich und tritt insbesondere bei Pouch-Zellen durch die Pouch-Zellen-spezifische Zellalterung auf.

Dadurch, dass das Füllmaterial erfindungsgemäß reversibel-elastisch verformbar ist, kann das Füllmaterial nun einem Volumenanstieg der Pouch-Zellen nachgeben. Mit anderen Worten kann bei einer Volumenvergrößerung der Pouch-Zellen dieses Mehr an Volumen durch das Füllmaterial ausgeglichen werden. Dies verhindert, dass mechanische Spannungen auftreten und das Gehäuse des Batteriepacks beschädigt oder gar aufgebrochen wird. Ebenfalls kann auch eine Volumenreduzierung der Pouch-Zellen, beispielsweise hervorgerufen durch ein Absinken der Umgebungstemperatur, durch das reversibel-elastische Füllmaterial ausgeglichen werden. Zum einen entstehen demnach keine Hohlräume zwischen Pouch-Zellen und Füllmaterial. Des Weiteren wird durch das reversibel-elastisch verformbare Füllmaterial ein Zellschutz vor äußeren mechanischen Einflüssen realisiert.

Es hat sich als vorteilhaft herausgestellt, wenn das Füllmaterial eine Material-Elastizität aufweist, die größer ist als eine Zell-Elastizität der Pouch-Zellen.

In einer besonders bevorzugten Ausgestaltung ist das Füllmaterial ein Elastomer oder weist ein solches auf. Das Füllmaterial ist vorzugsweise ausgewählt aus der Gruppe: Polyurethan, Butadien-Kautschuk, Butylkautschuk, Ethylen-Propylen-Dien-Kautschuk, Silicon-Kautschuk.

In einer besonders bevorzugten Ausgestaltung ist das Füllmaterial in Form wenigstens eines Einlegeelements bereitgestellt, das zwischen den Pouch-Zellen eingelegt oder einzulegen ist. Ist eine Vielzahl von Pouch-Zellen vorgesehen, so befindet sich vorzugsweise je ein Einlegeelement zwischen benachbarten Pouch-Zellen. Vorzugsweise sind die Einlegeelemente flächig ausgebildet, wobei eine Oberfläche im Wesentlichen gleich groß sein kann wie eine Oberfläche einer jeweiligen Pouch-Zelle.

In einer anderen bevorzugten Ausgestaltung ist das Füllmaterial in Form einer Vergussmasse bereitgestellt. Vorzugsweise umhüllt die Vergussmasse die Pouch-Zelle und/oder die Pouch-Zellen vollständig. In einer weiteren bevorzugten Ausgestaltung sind sowohl die Pouch-Zellen vollständig von der Vergussmasse umhüllt als auch das Gehäuse im Wesentlichen vollständig mit der Vergussmasse verfüllt.

Es hat sich als vorteilhaft herausgestellt, wenn das Füllmaterial zwischen wenigstens einer der Pouch-Zellen und einer Wand des Gehäuses befindlich ist. Ist das Füllmaterial in Form wenigstens eines Einlegeelements bereitgestellt, so kann dieses zwischen einer äußeren Pouch-Zelle und der Wand des Gehäuses angeordnet sein.

Es hat sich als besonders vorteilhaft herausgestellt, dass jede der Pouch-Zellen beidseitig an das Füllmaterial angrenzt. Besonders bevorzugt sind die Pouch-Zellen als Lithium-Polymerzellen ausgeführt. Bevorzugt ist das Füllmaterial frei von einem Duroplast.

Erfindungsgemäß ist die Leerlaufspannung des Akkus auf 60 V Gleichspannung begrenzt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines erfindungsgemäßen Akkupacks, wobei das Füllmaterial in Form von Einlegeelementen bereitgestellt ist;
- Fig. 2: eine perspektivische Ansicht des Ausführungsbeispiels der Fig. 1;
- Fig. 3: das Ausführungsbeispiel der Fig. 1 und 2, wobei die Pouch-Zellen einem Swelling unterliegen;
- Fig. 4: ein zweites bevorzugtes Ausführungsbeispiel eines erfindungsgemäßen Akkupacks, wobei das Füllmaterial in Form einer Vergussmasse bereitgestellt ist;
- Fig. 5: eine perspektivische Darstellung des Ausführungsbeispiels der Fig. 4; und
- Fig. 6: das Ausführungsbeispiel der Fig. 4 und 5, wobei die Pouch-Zellen einem Swelling unterlegen sind.

### Ausführungsbeispiele:

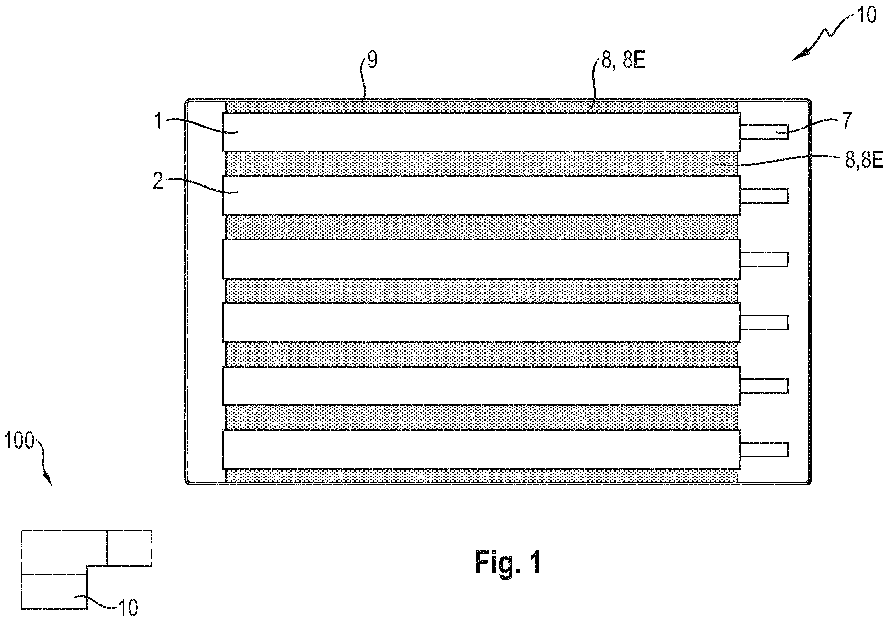

Eine schematische Darstellung eines besonders bevorzugten Ausführungsbeispiels eines erfindungsgemäßen Akkupacks 10 ist in Fig. 1 dargestellt.

Der Akkupack 10 dient der elektrischen Versorgung einer elektrischen Handwerkzeugmaschine 100, die schematisch in der linken Ecke der Fig. 1 dargestellt ist. Der Akkupack 10 ist als Wechselakku für die elektrische Handwerkzeugmaschine 100 ausgebildet.

Der Akkupack 10 weist ein Gehäuse mit wenigstens zwei darin angeordneten Pouch-Zellen 1, 2 auf. Im vorliegend dargestellten Ausführungsbeispiel sind sechs Pouch-Zellen vorgesehen. Zwischen den Pouch-Zellen 1, 2 ist ein Füllmaterial 8 befindlich. Das Füllmaterial 8 ist im in Fig. 1 dargestellten Ausführungsbeispiel als Einlegeelement 8E bereitgestellt, das zwischen den Pouch-Zellen 1, 2 eingelegt ist.

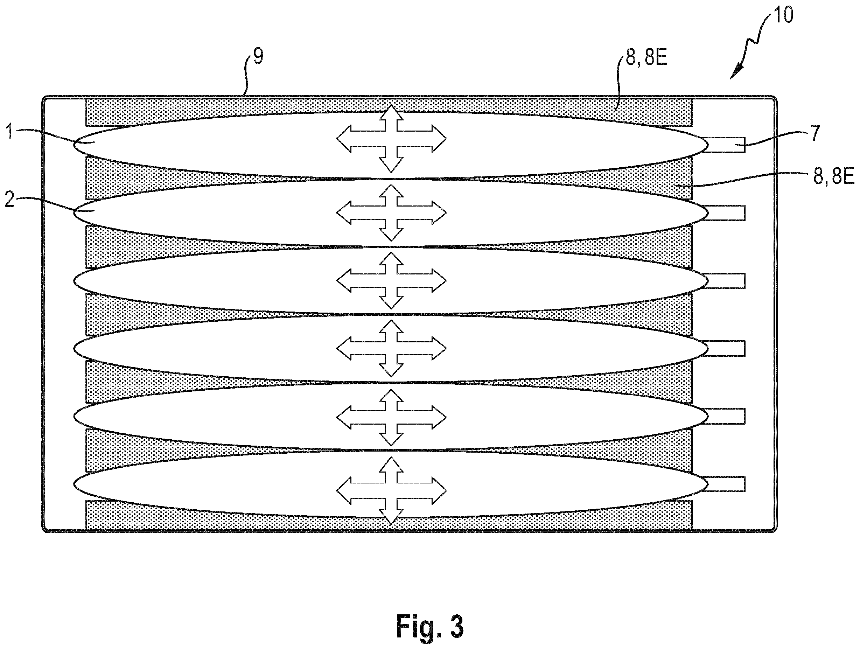

Erfindungsgemäß ist das Füllmaterial als reversibel-elastisch verformbares Füllmaterial bereitgestellt, sodass das Füllmaterial 8 einem Volumenanstieg der Pouch-Zellen 1, 2 (vgl. Fig. 3) nachgeben kann.

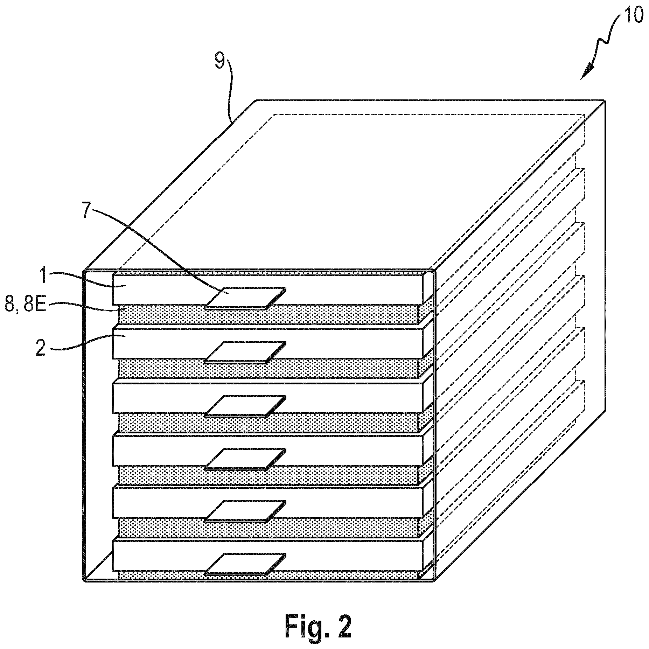

Beispielhaft ist das in Form von Einlegeelementen 8E bereitgestellte Füllmaterial 8 in Form von flächigen Butadien-Kautschukmatten bereitgestellt. Die jeweiligen Einlegeelemente 8E sind sowohl zwischen allen benachbarten Pouch-Zellen 1, 2 als auch zwischen der Pouch-Zelle 1 und einer Wand des Gehäuses 9 angeordnet. Jede der Pouch-Zellen 1, 2 grenzt beidseitig an das Füllmaterial 8 an. An den jeweiligen kurzen Seiten (links und rechts in Fig. 1) sind die Pouch-Zellen 1, 2 frei von Füllmaterial 8. Dies ist besonders gut in Fig. 2 zu erkennen, die eine perspektivische Darstellung des Ausführungsbeispiels aus Fig. 1 zeigt. Ebenfalls aus Fig. 2 erkennbar ist, dass auch die Längsseiten der jeweiligen Pouch-Zellen 1, 2 (linke und rechte Seite in Fig. 2) frei von dem Füllmaterial 8 sind.

Im gezeigten Ausführungsbeispiel sind die Pouch-Zellen 1, 2 als Lithium-Polymerzellen ausgeführt und über die Kontaktfahnen 7 miteinander elektrisch kontaktiert, erfindungsgemäß ist die

Leerlaufspannung des Akkupacks 10 auf 60 V Gleichspannung begrenzt.

Aus Fig. 3 wird nunmehr der erfindungsgemäße Vorteil des reversibel-elastisch verformbaren Füllmaterials 8 sichtbar. Beim sogenannten Swelling der Pouch-Zellen 1, 2, dehnen sich die Pouch-Zellen allseitig aus, besonders aber in ihrer Dicke.

Durch diesen Volumenanstieg der Pouch-Zellen 1, 2 wird das reversibel-elastisch verformbare Füllmaterial 8 verformt, im konkreten Fall komprimiert. Dadurch wird ein Volumenanstieg der

Pouch-Zellen 1, 2 kompensiert und eine mechanische Druckspannung auf das Gehäuse 9 bzw. die Pouch-Zellen 1, 2 untereinander vermieden oder zumindest wesentlich verringert.

Im Gegensatz zu Akkupacks des Standes der Technik, bei denen durch duroplastische Harzhärtergemische eine Volumenarbeit der Akkuzellen vermieden werden soll, ist es gerade Konzept der vorliegenden Erfindung, dieser Volumenarbeit der Akkuzellen gezielt kompensatorisch nachzugeben.

Das Füllmaterial 8 weist im vorliegenden Ausführungsbeispiel eine Material-Elastizität auf, die größer ist als eine Zell-Elastizität der Pouch-Zellen.

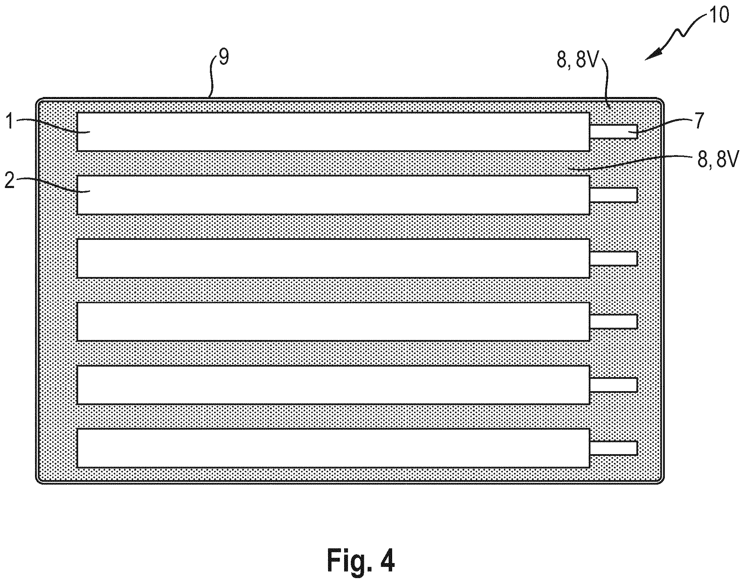

Ein zweites bevorzugtes Ausführungsbeispiel eines erfindungsgemäßen Akkupacks 10 ist in Fig. 4 dargestellt. Auch dieser Akkupack 10 weist ein Füllmaterial 8 auf, das reversibel-elastisch verformbar ist, derart, dass das Füllmaterial 8 einem Volumenanstieg der Pouch-Zellen 1, 2 nachgeben kann.

Im Gegensatz zu dem mit Bezug auf die Figuren 1 bis 3 beschriebenen Ausführungsbeispiel ist das Füllmaterial 8 in Form einer Vergussmasse 8V bereitgestellt, die die Pouch-Zellen 1, 2 vollständig umhüllt. Das Füllmaterial 8 weist eine Material-Elastizität auf, die größer ist als eine Zell-Elastizität der Pouch-Zellen 1, 2. Im vorliegenden Ausführungsbeispiel ist das Füllmaterial 8 in Form eines elastomerisch eingestellten Polyurethans bereitgestellt.

Wie der Fig. 4 entnommen werden kann, ist durch das Füllmaterial 8 in Form einer der Vergussmasse 8V jede der sechs Pouch-Zellen 1, 2 vollständig umhüllt.

Des Weiteren ist zwischen den äußeren Pouch-Zellen und der Wand des Gehäuses 9 ebenfalls Füllmaterial 8 in Form der Vergussmasse 8V vorhanden.

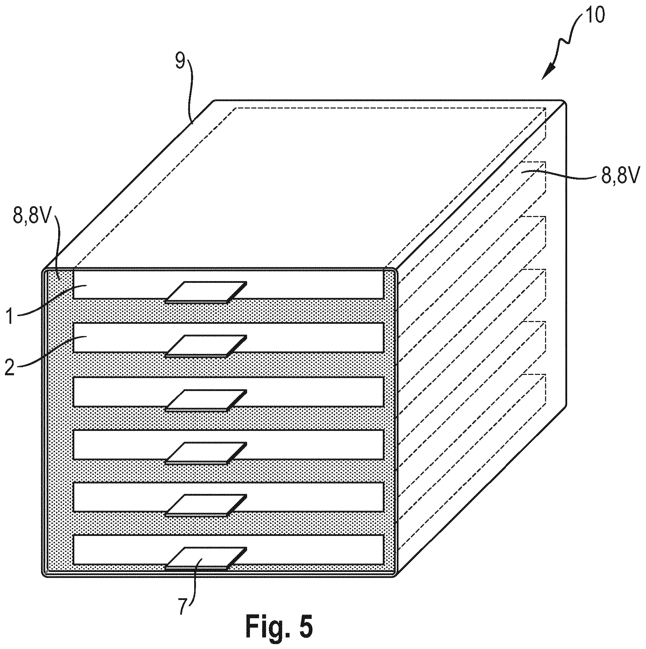

Dies ist besonders gut in Fig. 5 zu erkennen, die das Ausführungsbeispiel der Fig. 4 in perspektivischer Darstellung zeigt. Das gesamte Gehäuse 9 ist mit der Vergussmasse 8V ausgefüllt, sodass keinerlei Hohlräume zwischen den Pouch-Zellen 1, 2 untereinander sowie keine Hohlräume zwischen den Pouch-Zellen und dem Gehäuse 9 existent sind.

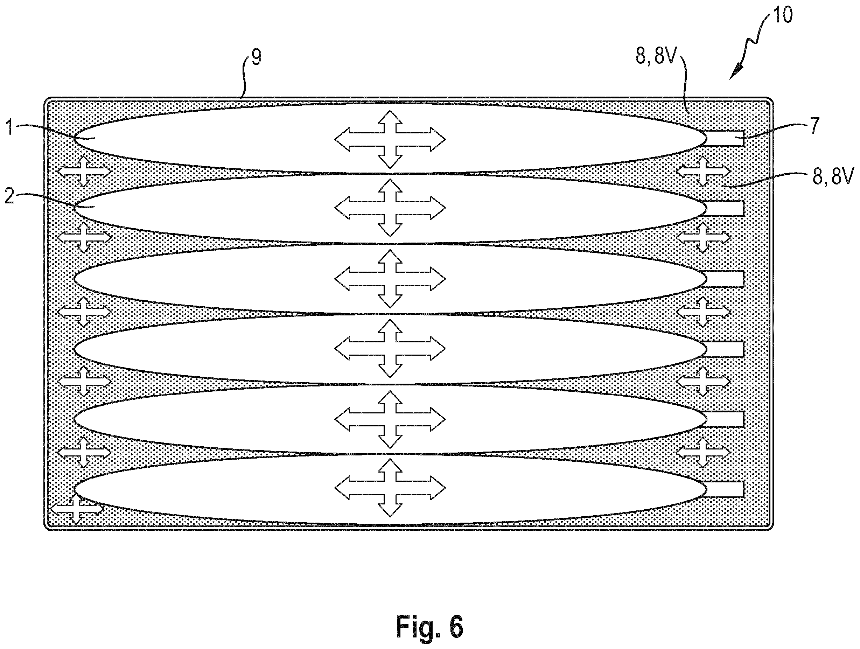

Fig. 6 zeigt nunmehr das Ausführungsbeispiel der Fig. 4 und 5, wobei die Pouch-Zellen 1, 2 dem sogenannten Swelling unterlegen sind. Durch die reversibel-elastisch verformbare Ausgestaltung der Vergussmasse 8V kann diese einem hier gezeigten Volumenanstieg der Pouch-Zellen 1, 2 nachgeben.

Wie der Fig. 6 entnommen werden kann, dehnen sich die Pouch-Zellen 1, 2 allseitig aus, wobei durch die vollständige Umhüllung durch die Vergussmasse 8V auch ein allseitiges Nachgeben selbiger ermöglicht ist. Dadurch sind die Pouch-Zellen 1, 2 vor mechanischen Einflüssen geschützt und können gleichermaßen keine wesentlichen mechanischen Spannungen auf das Gehäuse 9 sowie benachbarte Pouch-Zellen übertragen.

Es hat sich gezeigt, dass hierdurch die Stabilität bzw. Langzeithaltbarkeit des Akkupacks 10, insbesondere im robusten Einsatz bzw. bei erwärmten Zellen, deutlich erhöht wird.

### Bezugszeichenliste

- 1: Pouch-Zelle
- 2: Pouch-Zelle
- 7: Kontaktfahne
- 8: Füllmaterial
- 8E: Einlegeelement
- 8V: Vergussmasse
- 9: Gehäuse
- 10: Akkupack
- 100: Handwerkzeugmaschine

## Patentansprüche

1. Akkupack (10) für eine elektrische Handwerkzeugmaschine (100), wobei der Akkupack (10) ein Gehäuse (9) mit wenigstens zwei darin angeordneten Pouch-Zellen (1, 2) aufweist, wobei zwischen den Pouch-Zellen (1, 2) ein Füllmaterial (8) befindlich ist, wobei das Füllmaterial (8) reversibel-elastisch verformbar ist, derart, dass das Füllmaterial (8) einem Volumenanstieg der Pouch-Zellen (1, 2) nachgeben kann,
**dadurch gekennzeichnet, dass** die Leerlaufspannung des Akkupacks (10) auf 60 Volt Gleichspannung begrenzt ist.

2. Akkupack (10) nach Anspruch 1,
**dadurch gekennzeichnet, dass** das Füllmaterial (8) eine Material-Elastizität aufweist, die größer ist als eine Zellen-Elastizität der Pouch-Zellen (1, 2).

3. Akkupack (10) nach Anspruch 1 oder 2,
**dadurch gekennzeichnet, dass** das Füllmaterial (8) ein Elastomer ist oder ein solches aufweist, vorzugsweise aus der Gruppe: Polyurethan, Butadien-Kautschuk, Butylkautschuk, Ethylen-Propylen-Dien- Kautschuk, Silicon-Kautschuk.

4. Akkupack (10) nach einem der vorangehenden Ansprüche,
**dadurch gekennzeichnet, dass** das Füllmaterial (8) in Form wenigstens eines Einlegeelements (8E) bereitgestellt ist, das zwischen den Pouch-Zellen (1, 2) eingelegt ist.

5. Akkupack (10) nach einem der Ansprüche 1 bis 3,
**dadurch gekennzeichnet, dass** das Füllmaterial (8) in Form einer Vergussmasse (8V) bereitgestellt ist, die die Pouch-Zellen (1, 2) vorzugsweise vollständig umhüllt.

6. Akkupack (10) nach einem der vorangehenden Ansprüche,
**dadurch gekennzeichnet, dass** Füllmaterial (8) zwischen wenigstens einer der Pouch-Zellen (1, 2) und einer Wand des Gehäuses (9) befindlich ist.

7. Akkupack (10) nach einem der vorangehenden Ansprüche,
**dadurch gekennzeichnet, dass** jede der Pouch-Zellen (1, 2) beidseitig an das Füllmaterial (8) angrenzt.

8. Akkupack (10) nach einem der vorangehenden Ansprüche,
**dadurch gekennzeichnet, dass** die Pouch-Zellen (1, 2) als Li-Polymerzellen ausgeführt sind.

9. Akkupack (10) nach einem der vorangehenden Ansprüche,
**dadurch gekennzeichnet, dass** das Füllmaterial (8) frei von einem Duroplast ist.

## Claims

1. Battery pack (10) for an electric hand-held power tool (100), the battery pack (10) having a housing (9) with at least two pouch cells (1, 2) arranged therein, a filling material (8) being located between the pouch cells (1, 2), wherein the filling material (8) is reversibly-elastically deformable in such a way that the filling material (8) can yield to an increase in volume of the pouch cells (1, 2),
**characterized in that** the no-load voltage of the battery pack (10) is limited to 60 V DC voltage.

2. Battery pack (10) according to Claim 1,
**characterized in that** the filling material (8) has a material elasticity that is greater than a cell elasticity of the pouch cells (1, 2).

3. Battery pack (10) according to Claim 1 or 2,
**characterized in that** the filling material (8) is or comprises an elastomer, preferably from the group: polyurethane, butadiene rubber, butyl rubber, ethylene-propylene-diene rubber and silicone rubber.

4. Battery pack (10) according to one of the preceding claims,
**characterized in that** the filling material (8) is provided in the form of at least one insert element (8E) which is inserted between the pouch cells (1, 2).

5. Battery pack (10) according to one of Claims 1 to 3,
**characterized in that** the filling material (8) is provided in the form of a potting compound (8V), which preferably completely encapsulates the pouch cells (1, 2).

6. Battery pack (10) according to one of the preceding claims,
**characterized in that** filling material (8) is located between at least one of the pouch cells (1, 2) and a wall of the housing (9).

7. Battery pack (10) according to one of the preceding claims,
**characterized in that** each of the pouch cells (1, 2) adjoins the filling material (8) on both sides.

8. Battery pack (10) according to one of the preceding claims,
**characterized in that** the pouch cells (1, 2) are designed as Li-polymer cells.

9. Battery pack (10) according to one of the preceding claims,
**characterized in that** the filling material (8) is free of a thermosetting plastic.

## Revendications

1. Batterie (10) pour une machine-outil portative (100), la batterie (10) comportant un boîtier (9) ayant au moins deux cellules poches (1, 2) qui y sont disposées, une matière de remplissage (8) se trouvant entre les cellules poches (1, 2), la matière de remplissage (8) pouvant subir une déformation élastique-réversible de telle sorte que la matière de remplissage (8) puisse céder à une augmentation de volume des cellules poches (1, 2),
**caractérisée en ce que** la tension en circuit ouvert de la batterie (10) est limitée à une tension continue de 60 volts.

2. Batterie (10) selon la revendication 1,
**caractérisée en ce que** la matière de remplissage (8) présente une élasticité de matière qui est supérieure à une élasticité de cellule des cellules poches (1, 2).

3. Batterie (10) selon la revendication 1 ou 2,
**caractérisée en ce que** la matière de remplissage (8) est un élastomère ou en comprend un, de préférence du groupe polyuréthane, caoutchouc butadiène, caoutchouc butyle, caoutchouc éthylène-propylène-diène, caoutchouc silicone.

4. Batterie (10) selon l'une des revendications précédentes,
**caractérisée en ce que** la matière de remplissage (8) est fournie sous forme d'au moins un élément d'insertion (8E) qui est inséré entre les cellules poches (1, 2).

5. Batterie (10) selon l'une des revendications 1 à 3,
**caractérisée en ce que** la matière de remplissage (8) est fournie sous forme d'une masse de scellement (8V), qui entoure de préférence complètement les cellules poches (1, 2).

6. Batterie (10) selon l'une des revendications précédentes,
**caractérisée en ce que** la matière de remplissage (8) se trouve entre au moins l'une des cellules poches (1, 2) et une paroi du boîtier (9).

7. Batterie (10) selon l'une des revendications précédentes,
**caractérisée en ce que** chacune des cellules poches (1, 2) est des deux côtés, contiguë à la matière de remplissage (8).

8. Batterie (10) selon l'une des revendications précédentes,
**caractérisée en ce que** les cellules poches (1, 2) sont réalisées sous forme de cellules Li-polymère.

9. Batterie (10) selon l'une des revendications précédentes,
**caractérisée en ce que** la matière de remplissage (8) est exempte d'un thermodurcissable.
